(19)

Europäisches Patentamt

European Patent Office

Office européen des brevets

(11) **EP 4 072 222 A1**

(12) **EUROPEAN PATENT APPLICATION**

(43) Date of publication:
**12.10.2022 Bulletin 2022/41**

(21) Application number: **22166200.0**

(22) Date of filing: **31.03.2022**

(51) International Patent Classification (IPC):
**H04W 72/04** (2009.01)  **H04W 74/00** (2009.01)

(52) Cooperative Patent Classification (CPC):
**H04W 72/04; H04W 74/002**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.04.2021 FR 2103489**

(71) Applicant: **Tallinn University of Technology 19086 Tallinn (EE)**

(72) Inventors:
- **ALAM, Muhammad Mahtab 19086 Tallinn (EE)**
- **MWAKWATA, Collins Burton 19086 Tallinn (EE)**

(74) Representative: **Koppel, Mart Enn Koppel Patendibüroo Oü Kajaka 4-10 13418 Tallinn (EE)**

(54) **INTERFERENCE MINIMIZING COOPERATIVE SCHEDULER FOR ORTHOGONAL MULTIPLE ACCESS (OMA) AND NON-ORTHOGONAL MULTIPLE ACCESS (NOMA) WIRELESS COMMUNICATIONS**

(57)    Interference minimizing cooperative scheduling of radio resources for orthogonal multiple access (OMA) and non-orthogonal multiple access (NOMA) wireless communications includes receiving from each of multiple different base stations a base station scheduling table scheduling associated UE and corresponding base station channel parameters for each one of the radio resource channels of the one of the base stations. The method additionally includes computing prospective channel interface for each one of the radio resource channels for different combinations of the associated UE and generating a cooperative schedule for the associated UE for each one of the different base stations, the cooperative schedule assigning a specific one of the radio resource channels minimizing the computed prospective channel interference. Finally, the method includes transmitting the cooperative schedule to each of the different base stations for use by the different base stations in assigning the associated UE to assigned ones of the radio resource channels.

FIG 3

**EP 4 072 222 A1**

## Description

Field of the Invention

The present invention relates to the technical field of wireless communications for Internet of Things (IoT) devices, and more particularly to the scheduling of radio resource channels amongst IoT devices in a cellular radio communications network.

Description of the Related Art

Cellular data communications refer to the exchange of data traffic over a cellular telecommunications network. Digital cellular data communications require the presence of an underlying physical data communications infrastructure layered upon a cellular network, such as that first evidenced by second generation digital cellular communications, and more recently by the substantially more robust and reliable fourth generation (4G) long term evolution (LTE) cellular data communications network. In 4G LTE, the network architecture supports the connectivity of user equipment (UE) to different base stations clustered in different radio access networks (RANs) with the RANs each coupled to the core network (CN).

The base stations send and receive radio transmissions to each UE using the analog and digital signal processing functions of the LTE air interface through different multiple input multiple output (MIMO) antenna arrays. Each base station also controls the low-level operation of each coupled UE, by sending the UE signaling messages such as handover commands. Finally, each base station connects with the CN, also known as the "Evolved Packet Core" (EPC), by means of an S1 protocol stack interface. Of note, each base station also may be communicatively coupled to another, nearby base station by an X2 interface, so as to support signaling and packet forwarding during handover of a communication with UE from base station to base station (cell to cell). Whereas 4G represented a giant leap in performance over 2D and 3G networks 5G represents an enormous improvement over 4G.

Capitalizing on Massive MIMO antenna arrays in each base station, the utilization of millimeter wave radio communications, beamforming for direct wireless communications with individual UE, and a bifurcated centralized unit (CU) and distributed unit (DU) architecture, 5G is able to achieve a data exchange capacity of nearly thirteen terabytes--almost a twenty times improvement over 4G LTE. The CN of the 5G architecture reflects a substantial change over the EPC of 4G. In the CN of 5G, the changes have been reduced, abstractly, into what has been referred to as the "Four Modernizations". The first is "information technology" or "IT", the second is the "Internet", the third is "extremely simplified", and the fourth is "service-based". The most typical change in the network architecture of the CN is the service-based network architecture of the CN so as to separate the control plane from the user plane. Other technologies support network slicing and edge computing.

Importantly, 5G enables new service verticals such as massive Internet of Things (IoT), mission-critical communications, and the enhanced mobile broadband communications. To wit, at present IoT devices rely upon short range wireless technologies such as Bluetooth, Zigbee, Z-Wave and even Wi-Fi. However, the density limitations for each range only to the order of hundreds of devices. This limitation does not exist in the 5G cellular radio communications domain. Thus, owing to the capabilities of 5G, it is expected that the number of connected IoT devices will reach fifteen billion over the next decade, and the density of such devices within any one cluster of base stations is expected to be quite significant.

To realize the goal of massive IoT under cellular technologies advanced multiple access techniques, proactive radio resource scheduling, advanced link-level adaptation and novel interference management approach become inevitable. This is because the available RF spectrum and the transmit power budget of a device generally is limited. Current 5G deployments implement OMA schemes which provide orthogonality in terms of radio resources to effectively use the available spectrum. However, for massive IoT technologies these OMA schemes are not able to reach the capacity demand of supporting more than fifty-thousand devices per base station. Furthermore, the 5G spectrum, and 5G new radio capabilities bring the possibility of massive connectivity support of up to one-million devices per square kilometer. Consequently, proactive scheduling and advanced multiple access techniques to support such dense deployment is of great significance.

To enhance the connectivity support beyond 5G, NOMA has proven promising in its ability to provide the capacity enhancement of above one-hundred thousand devices per cell. Contrary to OMA, NOMA gives the possibility to simultaneously superpose multiple devices in a given available radio resource while allocating different power coefficients or codes to perform the successive interference cancellation at the receiver. Thus, NOMA brings an exponential increase in device support as compared to OMA approach, but at a cost of increased receiver complexity--a cost not always willing to be borne by a low power IoT device. Specifically, NOMA involves superposition coding and successive interference cancellation at the transmitter and receiver, respectively. Both are highly computationally complex for massive machine-type communications applications. Therefore, for both OMA and NOMA, if the radio resources are not well managed, the massive connectivity will result in massive interference, and consequently, severe performance degradation for legacy, 5G, and beyond 5G systems.

BRIEF SUMMARY OF THE INVENTION

Embodiments of the present invention address technical deficiencies of the art in respect to radio resource scheduling in a cellular radio communications network and in particular, enables a high density of IoT devices amongst a limited number of cells using NOMA where permissible despite the cost limitations of connected, low-power IoT devices. To that end, embodiments of the present invention provide for a novel and non-obvious method for interference minimizing cooperative scheduling of radio resources for OMA and NOMA wireless communications. Embodiments of the present invention also provide for a novel and non-obvious computing device adapted to perform the foregoing method. Finally, embodiments of the present invention provide for a novel and non-obvious data processing system incorporating the foregoing device in order to perform the foregoing method.

In one embodiment of the invention, a method for interference minimizing cooperative scheduling of radio resources for OMA and NOMA wireless communications includes first establishing a communicative coupling over computer communications network to each of several different base stations in a cellular radio communications network and receiving from each one of the multiple different base stations from over the computer communications network, a base station scheduling table scheduling associated UE and corresponding base station channel parameters for each one of the radio resource channels of the one of the multiple different base stations. The method additionally includes computing prospective channel interface for each one of the radio resource channels for different combinations of the associated UE and generating a cooperative schedule for the associated UE for each one of the different base stations, the cooperative schedule assigning a specific one of the radio resource channels minimizing the computed prospective channel interference. Finally, the method includes transmitting the cooperative schedule to each of the different base stations for use by the different base stations in assigning the associated UE to assigned ones of the radio resource channels.

In one aspect of the embodiment, the associated UE for the different base stations support OMA. Consequently, the prospective channel interference includes only inter-channel interference. However, in another aspect of the embodiment, the associated UE for the different base stations support NOMA. Therefore, the prospective channel interference includes both inter-channel interference and co-channel interference. Further, the generation of the cooperative schedule includes, for each of the different base stations, classifying the associated UE into corresponding groups based upon good, poor and average channel interference and superimposing in each channel, only the associated UE classified in different groups.

In another embodiment of the invention, a data processing system is adapted for interference minimizing cooperative scheduling of radio resources for OMA and NOMA wireless communications. The system includes a multiplicity of different base stations in a cellular radio communications network and a host computing platform communicatively linked to the different base stations. The platform includes one or more computers, each with memory and one or processing units including one or more processing cores. Finally, the system includes an interference minimizing scheduling module.

The module includes computer program instructions enabled while executing in the memory of at least one of the processing units of the host computing platform to establish a communicative coupling over the computer communications network to each of the different base stations and to receive from each one of the multiple different base stations from over the computer communications network, a base station scheduling table scheduling associated UE and corresponding base station channel parameters for each one of the radio resource channels of the one of the multiple different base stations. The computer program instructions further are enabled to compute prospective channel interface for each one of the radio resource channels for different combinations of the associated UE and to generate a cooperative schedule for the associated UE for each one of the different base stations, the cooperative schedule assigning a specific one of the radio resource channels minimizing the computed prospective channel interference. Finally, the program instructions are enabled to transmit the cooperative schedule to each of the different base stations for use by the different base stations in assigning the associated UE to assigned ones of the radio resource channels.

In even yet another embodiment of the invention, a computing device is provided. The device includes a nontransitory computer readable storage medium having program instructions stored therein. The instructions are executable by at least one processing core of a processing unit so as to cause the processing unit to perform interference minimizing cooperative scheduling of radio resources for OMA and NOMA wireless communications. Specifically, the instructions when executed establish a communicative coupling over computer communications network to each of several different base stations in a cellular radio communications network and receive from each one of the multiple different base stations from over the computer communications network, a base station scheduling table scheduling associated UE and corresponding base station channel parameters for each one of the radio resource channels of the one of the multiple different base stations. The instructions further compute prospective channel interface for each one of the radio resource channels for different combinations of the associated UE. The instructions yet further generate a cooperative schedule for the associated UE for each one of the different base stations, the cooperative schedule assigning a specific one of the radio resource channels minimizing the computed prospective channel interference. Finally, the instructions transmit the cooperative schedule to each of the different base stations for use by the different base stations in assigning the associated UE to assigned ones of the radio resource channels.

As it will be understood, owing to the interference minimizing cooperative scheduling of the present invention, the technical deficiencies of integrating into a high-density grouping of base stations, the use of NOMA for correspondingly enabled UE while permitting OMA for lesser enabled UE, all the while, while minimizing channel interference between the UE amongst the base stations, are overcome. Additional aspects of the invention will be set forth in part in the description which follows, and in part will be obvious from the description, or may be learned by practice of the invention. The aspects of the invention will be realized and attained by means of the elements and combinations particularly pointed out in the appended claims. It is to be understood that both the foregoing general description and the following detailed description are exemplary and explanatory only and are not restrictive of the invention, as claimed.

BRIEF DESCRIPTION OF THE SEVERAL VIEWS OF THE DRAWINGS

The accompanying drawings, which are incorporated in and constitute part of this specification, illustrate embodiments of the invention and together with the description, serve to explain the principles of the invention. The embodiments illustrated herein are presently preferred, it being understood, however, that the invention is not limited to the precise arrangements and instrumentalities shown, wherein:

Figure 1 is a pictorial illustration reflecting different aspects of a process of interference minimizing cooperative scheduling of radio resources for OMA and NOMA wireless communications.
Figure 2 is a block diagram depicting a data processing system adapted to perform one of the aspects of the process of Figure 1.
Figure 3 is a flow chart illustrating one of the aspects of the process of Figure 1.
Figure 4 is a chart of comparison of UE energy consumption between OMA and NOMA schemes.
Figure 5 is a chart of comparison of UE achieved data rates for OMA and NOMA schemes.
Figure 6 is a chart of comparison of the degree of fairness for OMA and NOMA schemes.

DETAILED DESCRIPTION OF THE INVENTION

Embodiments of the invention provide for interference minimizing cooperative scheduling of radio resources for OMA and NOMA wireless communications. In accordance with an embodiment of the invention, a process for interference minimizing cooperative scheduling of radio resources for OMA and NOMA wireless communications includes the receipt of both a scheduling table and also UE channel parameters for each of several, different base stations. Upon receipt of the scheduling tables and the parameters, the UE associated with each of the base stations are identified and prospective interference for each of a subset of the UE are determined were each UE in the subset to be co-located in the same radio resource channel. Then, a number of subsets corresponding to the number of available radio resource channels are chosen reflecting a minimization of prospective interface computed for all of the possible subsets. Finally, a cooperative table is constructed with each radio resource channel assigned to corresponding UE in one of the chosen subsets, and the cooperative table is then transmitted for use by each of the base stations. In this way, the scheduling of the UE in each of the base stations can be cooperatively determined in order to minimize channel interference irrespective of whether or not each of the UE supports NOMA or merely OMA.

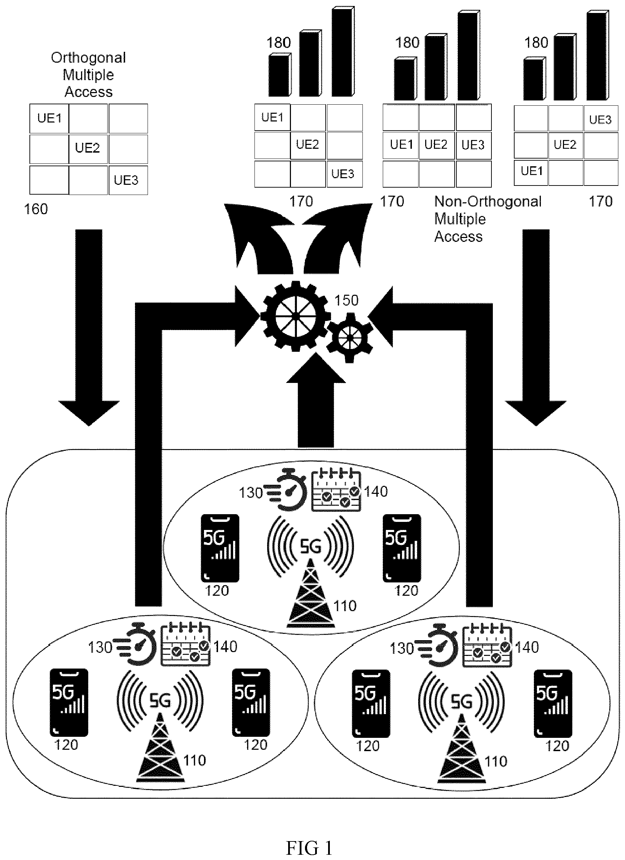

In further illustration, Figure 1 pictorially shows a process of interference minimizing cooperative scheduling of radio resources for OMA and NOMA wireless communications. As shown in Figure 1, different base stations 110 in a cellular radio communications network support connectivity for corresponding UE 120 according to respective scheduling tables 140. The different base stations 110 support either an OMA protocol for allocating channel resources, or a NOMA protocol depending upon the capabilities of the UE 120.

Cooperative scheduling logic 150 receives from each of the base stations 110, both the scheduling table 140 for the corresponding base station 110 along with channel performance data 130 for the corresponding base stations 110. In either the case of OMA or NOMA, the cooperative scheduling logic 150, utilizing the channel performance data 130 and specified radio channel resources of the scheduling table 140 computes inter-cellular interference for different combinations of the UE 120 scheduled at different ones of the channel resources so as to minimize interference. Thereafter, the cooperative scheduling logic 150 records in a cooperative scheduling table 160 an optimal assignment of the UE 120 to specific ones of the channel resources so as to achieve the minimal interference. The cooperative scheduling logic 150 then returns the cooperative scheduling table 160 to each of the base stations 110 for implementation.

Alternatively, to the extent NOMA is supported by the base stations 110, both inter-cellular interference and also intra-channel interference are accounted for. Specifically, in the latter instance, the cooperative scheduling logic 150 generates a classification 180 of the connectivity of each of the UE 120 with respect to the corresponding base stations 110. The cooperative scheduling logic 150 then computes a co-location of different sets of multiple different UE 120 in respective radio resource channels so as to minimize inter-cellular interface with the co-located ones of the UE 120 selected according to disparate classifications in order to minimize intra-channel interference. Thereafter, the cooperative scheduling logic 150 records in a cooperative scheduling table 170 for each separate one of the base stations 110, an optimal assignment of the UE 120 to specific ones of the channel resources so as to achieve the minimal interference. The cooperative scheduling logic 150 then returns each different cooperative scheduling table 170 to respective ones of the base stations 110 for implementation.

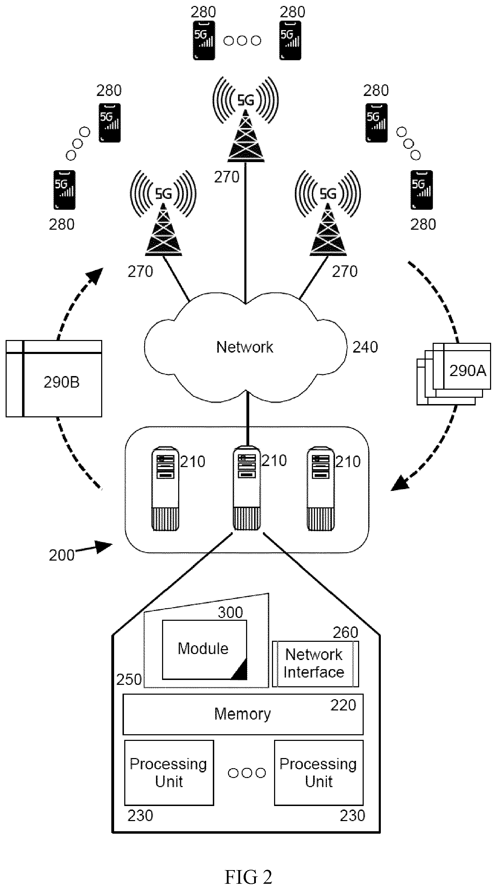

Aspects of the process described in connection with Figure 1 can be implemented within a data processing system. In further illustration, Figure 2 schematically shows a data processing system adapted to perform interference minimizing cooperative scheduling of radio resources for OMA and NOMA wireless communications. In the data processing system illustrated in Figure 1, a host computing platform 200 is provided. The host computing platform 200 includes one or more computers 210, each with memory 220 and one or more processing units 230. The computers 210 of the host computing platform (only a single computer shown for the purpose of illustrative simplicity) can be co-located within one another and in communication with one another over a local area network, or over a data communications bus, or the computers can be remotely disposed from one another and in communication with one another through network interface 260 over a data communications network 240.

Notably, a computing device 250 including a non-transitory computer readable storage medium can be included with the data processing system 200 and accessed by the processing units 230 of one or more of the computers 210. The computing device stores 250 thereon or retains therein a program module 300 that includes computer program instructions which when executed by one or more of the processing units 230, performs a programmatically executable process for interference minimizing cooperative scheduling of radio resources for OMA and NOMA wireless communications. Specifically, the program instructions during execution receive from each of the base stations 270 UE 280 channel parameters 290A along with respective scheduling tables.

The program instructions then compute interference weights by taking into consideration. one transmitting user associated with an exemplary one of the base stations 270 and interfering users from adjacent ones of the base stations 270. In the case of NOMA, co-channel interference is assumed to be negligible. The program instructions continue to perform the computation for each of the users for each of the base stations 270. Thereafter, in the case of OMA, the program instructions record a combination of the users that is computed to produce minimal inter-cellular interference into a cooperative scheduling table 290B which the program instructions then return to each of the base stations for implementation.

The process performed by the program instructions differ somewhat in the case of NOMA. In this regard, for NOMA, the program instructions account for both inter-cellular interference and also co-channel interference. For the former, as before the program instructions determine an optimal assignment of different UE 280 to different radio resource channels, however the optimal assignment is recorded uniquely and potentially differently for each different one of the base stations 270. As such, each of the UE 280 are classified in terms of connectivity performance, for instance "good", "moderate" and "bad". Then, for each different resource channel in different instances of a cooperative scheduling table, one for each base station 270, the program instructions co-locate within the same radio resource channel only those of the UE 280 of different classifications, and the program instructions assign each UE 280 within the same radio resource channel to a different time of transmission in order to minimize intra-channel interference.

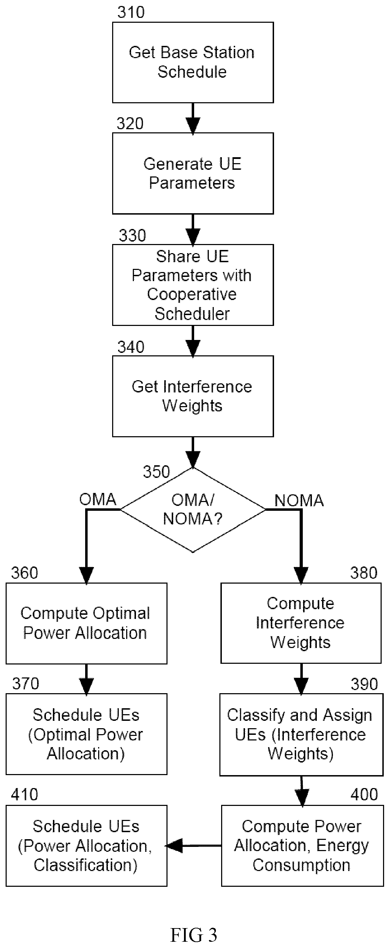

In further illustration of an exemplary operation of the module 300, Figure 3 is a flow chart illustrating one of the aspects of the process of Figure 1. Beginning in block 310, a base station schedule is received for each base station subjected to cooperative scheduling. Then, in block 320 different UE channel parameters are generated for each of the base stations and shared with the cooperative scheduler in block 330. In this regard, the UE channel parameters are generated according to the Okumura Hata channel model and an initial transmit power is set to the maximum allowed power per device, or to a required power calculated from the relation given by average interference power and the minimum required signal to interference plus noise ratio experienced by a user belonging to a specific base station on a given resource channel

$$P_{k_c}^z = \frac{In_{k_c}^z \, \vartheta_{k_c,min}}{\left| h_{k_c,c}^z \right|^2}$$

in which the lowest acceptable transmit power is

$$P^z_{k_c}$$

the known noise and interference level is

$$In^z_{k_c}$$

and the user k assigned to a specific radio resource channel of the base station has a channel gain of

$$\left|h^z_{k_c,c}\right|^2$$

In block 340, scheduling is determined according to an optimization problem computed as a function of the radio resource channel for a fixed transmit power:

$$\sum_{k \in K_c} a^z_{k_c} \le 1, \forall z \in Z, c \in C$$

in which "k" is the specific user amongst a set of users, "c" the specific base station of interest, and "z" the specific channel of interest with "a" indicating in a binary fashion if the user is to occupy the specified radio resource channel. The process then deviates in decision block 350 depending upon whether or not an OMA solution is preferred, or a NOMA solution is preferred.

In the former instance, at block 360, an algorithmically executable process for arriving at an optimal power allocation is computed:

**procedure** OPTIMAL POWER ALLOCATION

$$\frac{In^z_{k_c} \vartheta_{k_c,min}}{|h^z_{k_c,c}|^2} \leftarrow p$$

**while** $\frac{In^z_{k_c} \vartheta_{k_c,min}}{|h^z_{k_c,c}|^2} \leftarrow p$ **do**

$calculate\_Rate\_R_k$

**return** $R_k$

Then, in block 370 the UEs of each base station are assigned to respective ones of the radio channel resources according to the computed optimal power allocation.

n comparison, at decision block 350 if NOMA is preferred, in block 380 interference weights are computed for each of the UEs as follows:

**procedure** SHARE TO THE SCHEDULER ▷ to compute interference weights

**while** $In^z_{k_c} = \frac{|h^z_{k_c,c}|^2 P^z_{k_c}}{\vartheta_{i,min}} - P_n$ **do**

$Sort\_the\_UEs\_by\_Weight$

$Divide\_the\_UEs\_in\_three\_groups$

$Superpose\_One\_UE\_from\_each$

$group\_in\_a\_given\_subcarrier$

**while** $P^z_{k_c} \neq 0$ **do**

$allocate\_power\_according\_to\_constraint:$

$0 \le P^k_c \le P_{max}, \forall c \in C$

**return** $k$ ▷ UE IDs for available resources

Then, in block 390, each of the UEs are then classified according to interference weight so that each subcarrier for a cooperative scheduling table are assigned multiple different UE, each in a different classification. Then, in block 400, an optimal power allocation and corresponding energy consumption may be computed:

$$\text{procedure EVALUATE}$$
$$\text{while } \frac{I_c^z \vartheta_{c,min}}{|h_{c,c}^k|^2} \leftarrow p \text{ do}$$
$$calculate\_Rate\_R_k$$
$$calculate\_Energy\_Consumption$$
$$\textbf{return } R_k, energy$$

Finally, in block 410, the UEs may be scheduled according to subcarrier and radio resource channel based upon the optimal power allocation and corresponding energy consumption so as to minimize both inter-cellular interference and also intra-channel interference.

Performance evaluation

We have performed an analysis for 1000 iterations; for each iteration, the UEs are randomly distributed across each cell in order to calculate the channel parameters at different positions. We have selected a set of transmitting UEs from all base stations and another set of interfering UEs from adjacent cells at a given time slot. For the OMA scheme, we consider the set of interfering UEs as the UEs having the same time slot but from adjacent cells. For NOMA, however, we considered the interfering set as the UEs from adjacent cells transmitting at the same time slot, and UEs transmitting at the same time slot but from the same cell. We computed different performance metrics and the results are as presented in the next section.

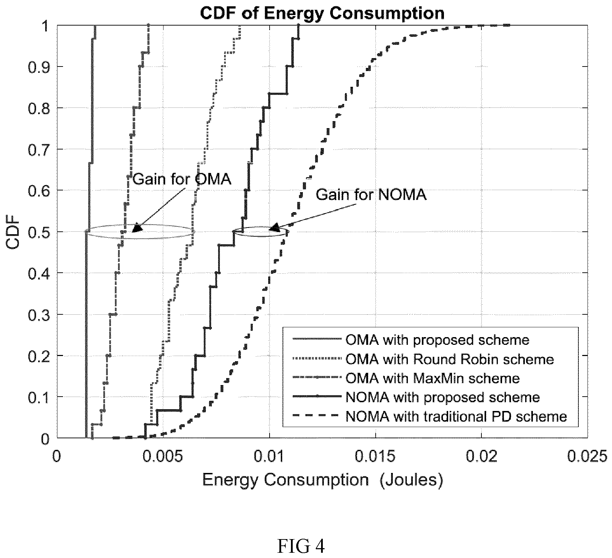

Fig. 4 presents the UE energy consumption for OMA and NOMA with the proposed scheme against the benchmark schemes. It can be noted that the OMA scheme experiences relatively lower energy consumption as compared to the NOMA scheme. For example, 50% of UEs under the proposed OMA experience about 40% and 75% lower energy consumption than MaxMin and Round Robin, respectively. Similarly, for NOMA, our proposed scheme achieves lower energy consumption as compared to the traditional power domain NOMA (PD NOMA). The energy consumption enhancements are enabled by the reduced impact of intercell interference and the optimal power allocation that reduces the excessive transmission power while guaranteeing the expected QoS at the transmitting users. Furthermore, the reduced interference impact maximizes the SINR, hence relatively reduces the number of repetitions at the transmitting UEs.

For example, the MaxMin scheme maximizes the minimum achieved QoS by allocating more resources to cell-edge users, this approach causes UEs to use maximum transmit power which yields more energy consumption. On the other hand, Round Robin implements a first-come first-saved strategy while allocating resources to UEs; while doing so, cell edge UEs suffer from uncontrolled massive interference from adjacent cells hence increases the transmit power to counteract the ICI.

On the other hand, traditional PD NOMA simultaneously allocates the same available resources to a given number of UEs, when the ICI is not well managed these UEs suffer from both the co-channel interference as well as interference from adjacent cell UEs. In this regard, the impact of interference at a given subcarrier is more significant, hence the UEs are forced to use the maximum allowed power to transmit which leads to excessive energy consumption. Our proposed NOMA scheme takes into account both the co-channel interference and ICI; in this regard, UEs are better scheduled and their transmit power is optimized. In doing so, the overall energy consumption is reduced.

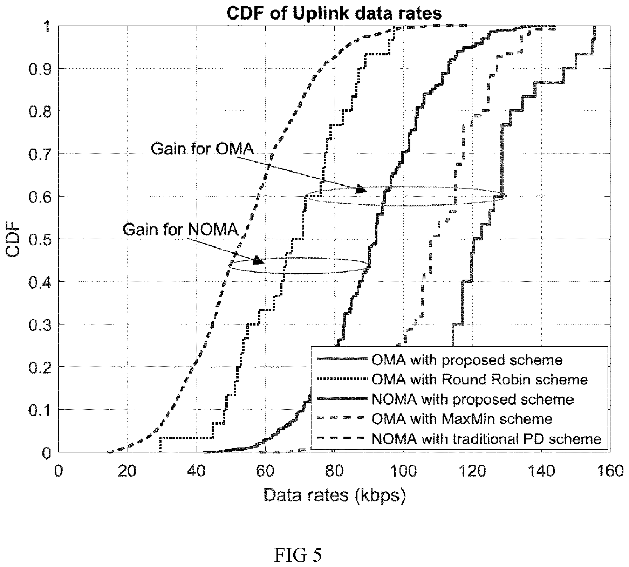

Fig. 5 presents the achieved UE data rates. From the analysis of the results, our proposed scheme outperforms both the Round Robin and Maxmin schemes. Contrary to the MaxMin scheme that favors the UEs under bad channel conditions, and Round Robin that operates under a first-come-first-served strategy, our proposed scheme considers the UEs in both good and bad channel conditions by allocating different power coefficients to avoid interference. By doing so, the UEs under our proposed scheme, especially under the OMA approach achieve relatively higher throughput. It should be noted that the OMA approach has fewer UEs per resource unit, therefore experience a low impact of interference which leads to higher achieved throughput.

It is observed that, with our proposed approach, more than 50% of the UEs achieve above 120 kbps, however, Round Robin and the MaxMin scheduling schemes achieve only 70 and 105 kbps, respectively. On the other hand, the UEs under the proposed NOMA scheme achieve an average of 40 kbps higher than the UEs under traditional PD NOMA. The enhancements are due to the controlled ICI impact, as well as limiting the number of UEs that can be superposed at a given subcarrier.

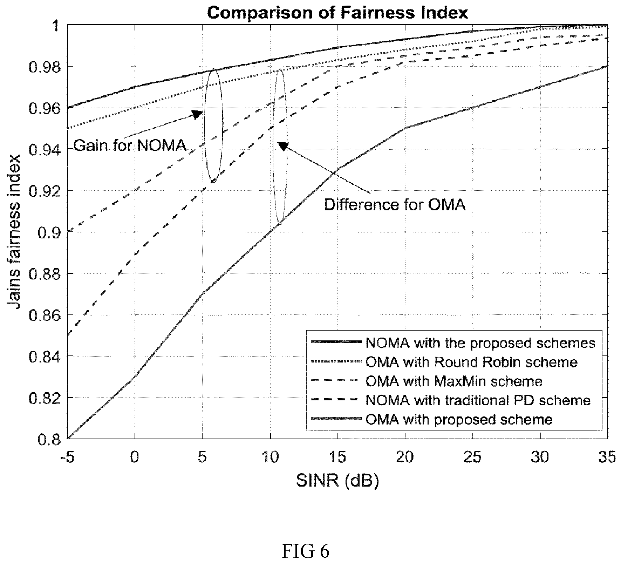

Fig. 6 presents the UE fairness when our proposed scheme is compared to other scheduling schemes from literature. During the fairness analysis, the simulated SINR range was based on real-time SINR values from IoT sensors;

the SINR values range from -5 dB (i.e., lowest SINR) to 35 dB (highest SINR). Since most of the schedulers consider the channel parameters before attributing the radio resources to UEs, the higher SINR values trigger the increase in scheduling fairness. Our proposed NOMA scheme outperforms the traditional PD scheme and OMA schemes hence is more suitable for massive connectivity in dense networks.With proactive scheduling (avoiding ICI) and optimal power allocation, the same available resources can be used for devices at the cell edge and devices at the cell center.

On the other hand, the Round Robin scheme outperforms the benchmark OMA schemes by allocating resources to UEs regardless of their channel condition. For example, our proposed OMA scheme lags behind both Round Robin and MaxMin schemes; this is due to its selection process which incurs prioritization, and as a consequence, results in lower fairness. If these schemes are implemented in practical systems, the fairness measurements shown above can help to compensate the devices that are treated unfairly (low fairness index) in the previous allocation step and improve the targeted QoS in the current allocation step.

Of import, the foregoing flowchart and block diagram referred to herein illustrate the architecture, functionality, and operation of possible implementations of systems, methods, and computing devices according to various embodiments of the present invention. In this regard, each block in the flowchart or block diagrams may represent a module, segment, or portion of instructions, which includes one or more executable instructions for implementing the specified logical function or functions. In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

More specifically, the present invention may be embodied as a programmatically executable process. As well, the present invention may be embodied within a computing device upon which programmatic instructions are stored and from which the programmatic instructions are enabled to be loaded into memory of a data processing system and executed therefrom in order to perform the foregoing programmatically executable process. Even further, the present invention may be embodied within a data processing system adapted to load the programmatic instructions from a computing device and to then execute the programmatic instructions in order to perform the foregoing programmatically executable process.

To that end, the computing device is a non-transitory computer readable storage medium or media retaining therein or storing thereon computer readable program instructions. These instructions, when executed from memory by one or more processing units of a data processing system, cause the processing units to perform different programmatic processes exemplary of different aspects of the programmatically executable process. In this regard, the processing units each include an instruction execution device such as a central processing unit or "CPU" of a computer. One or more computers may be included within the data processing system. Of note, while the CPU can be a single core CPU, it will be understood that multiple CPU cores can operate within the CPU and in either instance, the instructions are directly loaded from memory into one or more of the cores of one or more of the CPUs for execution.

Aside from the direct loading of the instructions from memory for execution by one or more cores of a CPU or multiple CPUs, the computer readable program instructions described herein alternatively can be retrieved from over a computer communications network into the memory of a computer of the data processing system for execution therein. As well, only a portion of the program instructions may be retrieved into the memory from over the computer communications network, while other portions may be loaded from persistent storage of the computer. Even further, only a portion of the program instructions may execute by one or more processing cores of one or more CPUs of one of the computers of the data processing system, while other portions may cooperatively execute within a different computer of the data processing system that is either co-located with the computer or positioned remotely from the computer over the computer communications network with results of the computing by both computers shared therebetween.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

Having thus described the invention of the present application in detail and by reference to embodiments thereof, it will be apparent that modifications and variations are possible without departing from the scope of the invention defined in the appended claims as follows:

**Claims**

1. A method for interference minimizing cooperative scheduling of radio resources for orthogonal multiple access (OMA) and non-orthogonal multiple access (NOMA) wireless communications, the method comprising:

   establishing a communicative coupling over computer communications network to each of several different base stations in a cellular radio communications network;
   receiving from each one of the multiple different base stations from over the computer communications network, a base station scheduling table scheduling associated user equipment (UE) and corresponding base station channel parameters for each one of the radio resource channels of the one of the multiple different base stations;
   computing prospective channel interface for each one of the radio resource channels for different combinations of the associated UE;
   generating a cooperative schedule for the associated UE for each one of the different base stations, the cooperative schedule assigning a specific one of the radio resource channels minimizing the computed prospective channel interference; and,
   transmitting the cooperative schedule to each of the different base stations for use by the different base stations in assigning the associated UE to assigned ones of the radio resource channels.

2. The method of claim 1, wherein the associated UE for the different base stations support OMA, the prospective channel interference comprising only inter-channel interference.

3. The method of claim 1, wherein the associated UE for the different base stations support NOMA, the prospective channel interference comprising both inter-channel interference and co-channel interference, the generating comprising:

   for each of the different base stations, classifying the associated UE into corresponding groups based upon good, poor and average channel interference; and,
   superimposing in each channel, only the associated UE classified in different groups.

4. A data processing system adapted for interference minimizing cooperative scheduling of radio resources for orthogonal multiple access (OMA) and non-orthogonal multiple access (NOMA) wireless communications, the system comprising:

   a multiplicity of different base stations in a cellular radio communications network;
   a host computing platform communicatively linked to the different base stations, the platform comprising one or more computers, each with memory and one or processing units including one or more processing cores; and,
   an interference minimizing scheduling module comprising computer program instructions enabled while executing in the memory of at least one of the processing units of the host computing platform to perform:

      establishing a communicative coupling over the computer communications network to each of the different base stations;
      receiving from each one of the multiple different base stations from over the computer communications network, a base station scheduling table scheduling associated user equipment (UE) and corresponding base station channel parameters for each one of the radio resource channels of the one of the multiple different base stations;
      computing prospective channel interface for each one of the radio resource channels for different combinations of the associated UE;
      generating a cooperative schedule for the associated UE for each one of the different base stations, the cooperative schedule assigning a specific one of the radio resource channels minimizing the computed prospective channel interference; and,
      transmitting the cooperative schedule to each of the different base stations for use by the different base stations in assigning the associated UE to assigned ones of the radio resource channels.

5. The system of claim 4, wherein the associated UE for the different base stations support OMA, the prospective channel interference comprising only inter-channel interference.

6. The system of claim 4, wherein the associated UE for the different base stations support NOMA, the prospective channel interference comprising both inter-channel interference and co-channel interference, the generating comprising:

for each of the different base stations, classifying the associated UE into corresponding groups based upon good, poor and average channel interference; and,
superimposing in each channel, only the associated UE classified in different groups.

7. A computing device comprising a non-transitory computer readable storage medium having program instructions stored therein, the instructions being executable by at least one processing core of a processing unit to cause the processing unit to perform a method for interference minimizing cooperative scheduling of radio resources for orthogonal multiple access (OMA) and non-orthogonal multiple access (NOMA) wireless communications, the method including:

establishing a communicative coupling over computer communications network to each of several different base stations in a cellular radio communications network;
receiving from each one of the multiple different base stations from over the computer communications network, a base station scheduling table scheduling associated user equipment (UE) and corresponding base station channel parameters for each one of the radio resource channels of the one of the multiple different base stations;
computing prospective channel interface for each one of the radio resource channels for different combinations of the associated UE;
generating a cooperative schedule for the associated UE for each one of the different base stations, the cooperative schedule assigning a specific one of the radio resource channels minimizing the computed prospective channel interference; and,
transmitting the cooperative schedule to each of the different base stations for use by the different base stations in assigning the associated UE to assigned ones of the radio resource channels.

8. The computing device of claim 7, wherein the associated UE for the different base stations support OMA, the prospective channel interference comprising only inter-channel interference.

9. The computing device of claim 7, wherein the associated UE for the different base stations support NOMA, the prospective channel interference comprising both inter-channel interference and co-channel interference, the generating comprising:

for each of the different base stations, classifying the associated UE into corresponding groups based upon good, poor and average channel interference; and,
superimposing in each channel, only the associated UE classified in different groups.

Orthogonal
Multiple
Access

| UE1 | | |
|-----|-----|-----|
| | UE2 | |
| | | UE3 |

160

| UE1 | | |
|-----|-----|-----|
| | UE2 | |
| | | UE3 |

170

| UE1 | UE2 | UE3 |
|-----|-----|-----|
| | | |
| | | |

170

| | | UE3 |
|-----|-----|-----|
| | UE2 | |
| UE1 | | |

170

Non-Orthogonal
Multiple
Access

180

150

130 140

5G

120  110  120

130 140

5G

120  110  120

130 140

5G

120  110  120

FIG 1

FIG 2

310

Get Base Station
Schedule

320

Generate UE
Parameters

330

Share UE
Parameters with
Cooperative
Scheduler

340

Get Interference
Weights

350

OMA/
NOMA?

OMA          NOMA

360

Compute Optimal
Power Allocation

380

Compute
Interference
Weights

370

Schedule UEs
(Optimal Power
Allocation)

390

Classify and Assign
UEs (Interference
Weights)

410

Schedule UEs
(Power Allocation,
Classification)

400

Compute Power
Allocation, Energy
Consumption

FIG 3

FIG 4

FIG 5

FIG 6

Europäisches
Patentamt

European
Patent Office

Office européen
des brevets

# EUROPEAN SEARCH REPORT

Application Number

EP 22 16 6200

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YANG LU ET AL: "Interference-Avoid Channel Assignment for Multi-Radio Multi-Channel Wireless Mesh Networks With Hybrid Traffic", IEEE ACCESS, vol. 7, 4 April 2019 (2019-04-04), pages 67167-67177, XP011728366, DOI: 10.1109/ACCESS.2019.2918355 | 1,4,7 | INV. H04W72/04 H04W74/00 |
| Y | * Abstract * | 2,3,5,6, 8,9 | |
| Y | US 2015/117388 A1 (LIU HANG [US] ET AL) 30 April 2015 (2015-04-30) * paragraph [0044] - paragraph [0055] * | 2,3,5,6, 8,9 | |

TECHNICAL FIELDS
SEARCHED       (IPC)

H04W

The present search report has been drawn up for all claims

| Place of search | Date of completion of the search | Examiner |
|---|---|---|
| The Hague | 25 August 2022 | Iavarone, Federico |

## ANNEX TO THE EUROPEAN SEARCH REPORT
## ON EUROPEAN PATENT APPLICATION NO.

**EP 22 16 6200**

This annex lists the patent family members relating to the patent documents cited in the above-mentioned European search report.
The members are as contained in the European Patent Office EDP file on
The European Patent Office is in no way liable for these particulars which are merely given for the purpose of information.

**25-08-2022**

| Patent document cited in search report | | Publication date | Patent family member(s) | | Publication date |
|---|---|---|---|---|---|
| US 2015117388 | A1 | 30-04-2015 | US 2011292898 | A1 | 01-12-2011 |
| | | | US 2014036845 | A1 | 06-02-2014 |
| | | | US 2015117388 | A1 | 30-04-2015 |
| | | | WO 2010096031 | A1 | 26-08-2010 |

EPO FORM P0459

For more details about this annex : see Official Journal of the European Patent Office, No. 12/82